# EUROPÄISCHE PATENTANMELDUNG

(11) **EP 2 511 545 A2**
(43) Veröffentlichungstag der Anmeldung: **17.10.2012**
(21) Anmeldenummer: 12164222.7
(22) Anmeldetag: 16.04.2012
(51) Int. Cl.: F16C 19/54, F16C 35/077

(54) **Konzept zum Bereitstellen einer Anlageschulter in einem zylinderförmigen Lagergehäuse**

(30) Priorität: 15.04.2011 DE 102011007494
(71) Anmelder: Aktiebolaget SKF, 41 550 Göteborg (SE)
(72) Erfinder: Hahn, Josef, 97464 Niederwerrn (DE); Kaiser, Hubert, 74388 Talheim (DE)
(74) Vertreter: Schonecke, Mitja

(57) **Zusammenfassung**

Ausführungsbeispiele betreffen ein Konzept zum Bereitstellen bzw. Nachrüsten einer ringförmigen Anlageschulter in einem zylinderförmigen Lagergehäuse (10) mit einem Gehäuseinnendurchmesser (dᵢ,₁₀). Dazu wird zunächst eine ringförmige Nut (11) auf einer Innenseite des zylinderförmigen Lagergehäuses (10) eingebracht. Danach wird ein erster Ring (12) als Anlageschulter in die ringförmige Nut (11) eingesetzt, wobei der erste Ring (12) einen ersten Ringaußendurchmesser (dₐ,₁₂) größer als der Gehäuseinnendurchmesser (dᵢ,₁₀) und einen ersten Ringinnendurchmesser (dᵢ,₁₂) kleiner als der Gehäuseinnendurchmesser (dᵢ,₁₀) aufweist.

## Beschreibung

Ausführungsbeispiele der vorliegenden Erfindung betreffen im Allgemeinen Wälzlagerungen und insbesondere angestellte Schräglager umfassende Wellenlagerungen.

Die Lagerung von Wellen ist eine weit verbreitete Aufgabe im Maschinenbau. Eine statisch bestimmte Lagerung umfasst dabei zwei Lager, welche die Freiheitsgrade zweier relativ zueinander bewegter Elemente beschränken. Bei der Lagerung von Wellen wird eine Rotation einer Welle in einem zylindrischen Lagergehäuse um eine Wellenlängsachse (Rotationsachse) bei gleichzeitig definierter Position im Raum ermöglicht. Um diese Vorgabe zu erfüllen, gibt es eine Reihe gängiger Lagerungsanordnungen bzw. Lagerungskonzepte.

Zur Aufnahme von Radial- und Axiallasten durch eine Welle sind mindestens zwei Lager erforderlich, wie sie beispielsweise bei angestellten Lagerungen in X-Anordnung oder in O-Anordnung vorkommen. Eine angestellte Lagerung umfasst üblicherweise zwei gegeneinander angestellte Schrägkugel- oder Kegelrollenlager oder auch Axial-Pendelrollenlager (zusammenfassend Schräglager), bei denen ein Lagerring auf seinen Sitz so weit verschoben wird, bis die Lagerung eine notwendige Vorspannung oder ein gewünschtes Spiel aufweist. Vorteile solcher X- oder O-Lageranordnungen sind beispielsweise Spielfreiheit und eine hohe Steifigkeit, da zwei Lager axial tragen können.

Die einfachste Art eines Lagergehäuses ist oftmals eine durchgehende zylindrische Bohrung. Bei darin angeordneten Schräglagern in X- oder O-Anordnung kann über Distanzringe und/oder Wellenmuttern eine Vorspannung der Lageranordnung eingestellt werden. Die Methode mittels Distanzring ist im Allgemeinen recht zuverlässig, jedoch bei Temperaturdifferenzen aufgrund Ausdehnung und/oder Zusammenziehen des Distanzrings/Gehäuse- und Wellenwerkstoffes anfällig. Eine Anstellung über eine Wellenmutter oder einen Deckel ist meistens recht ungenau. Daher kann es im Betrieb oftmals zu Lagerausfällen kommen, weil Lager wegen zu hoher Vorspannung entweder heiß laufen oder es zu Anschmierungen durch Unterschreiten einer erforderlichen Mindestlast kommt.

Daher ist eine Vorspannung von Lageranordnungen mittels Federn vorteilhaft. Damit kann erreicht werden, dass die Wälzkörper der einzelnen gegeneinander angeordneten Schräglager ständig in Berührung mit den entsprechenden Laufbahnen stehen, wodurch einerseits eine Genauigkeit der Lagerung und andererseits auch eine Geräuschbildung weitgehend vermieden werden kann. Bei einer Vorspannung mittels Federn ist - je nach Anordnung - beispielsweise einer der Lagerinnenringe axial verschiebbar auf der Welle angeordnet. Auf diesen Innenring wirkt eine Feder ein, die diesen gegenüber dem entsprechenden Lagerring des anderen Lagers verschiebt. Ohne eine äußere Belastung wird dadurch in diesen Lagern ständig die gleiche Vorspannung herrschen.

Eine derartige vorteilhafte Vorspannung mittels Federn ist im Nachhinein jedoch bei einer durchgehenden zylindrischen Bohrung im Lagergehäuse nicht ohne weiteres möglich, da kein Anschlag im Gehäuse vorhanden ist.

Eine Aufgabe der vorliegenden Erfindung besteht daher darin, eine zylindrische Gehäusebohrung im Nachhinein für eine durch Federkraft angestellte Lagerung umzubauen bzw. umzurüsten.

Es ist eine Erkenntnis der vorliegenden Erfindung, dafür im Nachhinein in einer zylindrischen Gehäusebohrung einen ringförmigen Anschlag vorzusehen, um in der zylindrischen Gehäusebohrung eine durch Federkraft angestellte bzw. vorgespannte Lagerung beispielsweise einer Welle zu ermöglichen. Dazu kann in die durchgehende zylindrische Gehäusebohrung zunächst eine ringförmig umlaufende Nut eingebracht werden. In diese ringförmig umlaufende Nut kann dann wiederum ein Ring eingebracht werden, welcher in dem zylindrischen Lagergehäuse als Anschlag- bzw. Anlageschulter für wenigstens einen Lagerring zur Vorspannung einer angestellten Schräglageranordnung mittels Federn fungieren kann.

Dazu schaffen Ausführungsbeispiele ein Verfahren zum Bereitstellen bzw. Nachrüsten einer ringförmigen Anschlag- bzw. Anlageschulter in einem zylinderförmigen Lagergehäuse mit einem Gehäuseinnendurchmesser, wobei das Verfahren einen Schritt des Einbringens einer ringförmigen Nut auf einer Innenseite des zylinderförmigen Lagergehäuses umfasst, sowie einen Schritt des Einsetzens, in die ringförmige Nut, eines ersten Rings als Anlageschulter (für wenigstens einen Lagerring) mit einem ersten Ringaußendurchmesser größer als der Gehäuseinnendurchmesser und einem ersten Ringinnendurchmesser kleiner als der Gehäuseinnendurchmesser. Dadurch erhält man in dem zylinderförmigen Lagergehäuse im Nachhinein eine Anlageschulter ohne dafür extra ein neues Lagergehäuse fertigen zu müssen. Es können nun beispielsweise in das umgebaute Lagergehäuse Federn und Lager, wie z. B. Schräglager (beispielsweise Schrägkugellager und/oder Kegelrollenlager) für eine angestellte bzw. vorgespannte Lageranordnung zur Lagerung einer Welle eingebaut werden.

Obwohl der erste Ring gemäß manchen Ausführungsbeispielen auch einteilig bzw. einstückig ausgebildet sein kann, beispielsweise in der Art eines Innen-Sicherungsrings bzw. eines Seegerrings, kann der als Anlage- bzw. Anschlagschulter fungierende erste Ring auch vorteilhaft eine Mehrzahl von Ringsegmenten auf weisen, welche segmentweise in die im zylinderförmigen Lagergehäuse ringförmig umlaufende Nut eingesetzt werden können. Um einen möglichst unproblematisches Einsetzen der Ringsegmente in die innenliegende Nut zu ermöglichen, handelt es sich bei bevorzugten Ausführungsbeispielen um wenigstens vier separate, d.h. voneinander getrennte, Ringsegmente des ersten Rings.

Nach dem (segmentweisen) Einsetzen des ersten Rings kann gemäß Ausführungsbeispielen ein zweiter einteiliger Ring mit einem zweiten Ringaußendurchmesser in das zylinderförmige Lagergehäuse bzw. die darin platzierten Ringsegmente des ersten Rings eingebracht werden. Der zweite Ring ist dabei angepasst, um den ersten Ring, insbesondere dessen Ringsegmente, in der ringförmig umlaufenden Nut des Lagergehäuses zu fixieren. Bei dem zweiten Ring handelt es sich also um einen Zentrierring, der einen zweiten Ringaußendurchmesser aufweist, der im Wesentlichen dem ersten Ringinnendurchmesser entspricht, sodass der Zentrierring in dem ersten Ring eine Art Klemmsitz einnehmen kann, um insbesondere dessen Ringsegmente in die ringförmig umlaufende Nut zu drücken und somit zu fixieren. Obwohl ein Klemmsitz des zweiten Rings (Zentrierring) in dem ersten Ring ein bevorzugtes Ausführungsbeispiel darstellt, sind auch Ausführungsformen denkbar, bei denen die Fixierung der Ringsegmente des ersten Rings durch Verschraubung, Verschweißen, Verkleben, etc., mit dem zweiten Ring erfolgen kann.

Nach dem Einsetzen des ersten und/oder des zweiten Rings in die Bohrung des zylinderförmigen Lagergehäuses können, samt einer Welle, zu beiden (Stirn-)Seiten des ersten und/oder des zweiten Rings Schräglager, wie z. B. Schrägkugellager oder Kegelrollenlager, zum Lagern der Welle in das zylinderförmige Lagergehäuse eingebracht werden, so dass ein Lagerring wenigstens eines der beidseitig angeordneten Schräglager an dem ersten und/oder zweiten Ring anliegt. An von dem ersten und/oder zweiten Ring, d.h. der Anlageschulter, wegweisenden Seiten der Schräglager können diese bzw. deren Lagerringe beispielsweise vermittels Wellenabsätzen und/oder Wellenmuttern auf der zu lagernden Welle fixiert sein.

Gemäß bevorzugten Ausführungsbeispielen fungiert der erste und/oder zweite eingebrachte Ring als axialer Anschlag für wenigstens eines der beidseitig dazu angeordneten Schräglager. Besonders bevorzugt kann eine derartige (nachgerüstete) Anordnung zur Vorspannung einer O-Anordnung von Schräglagern vermittels Federn eingesetzt werden. Dazu kann beispielsweise vor dem Einbringen des ersten Rings in die ringförmige Nut der erste Ring mit durch den Ring verlaufende Bohrungen versehen werden, um in eingebautem Zustand eine Durchführung von Federn (durch die Bohrungen) zum Vorspannen der Schräglageranordnung zu ermöglichen. Die durch die Bohrungen des ersten Rings geführten Federn können auf links- und rechtsseitig zu dem ersten Ring angeordneten Schräglageraußenringe eine Vorspannkraft ausüben, so dass selbst bei geringen Belastungen der Lageranordnung Anschmierungen vermieden und höhere Laufruhen der Lagerung erreicht werden können.

Gemäß Ausführungsbeispielen ist die wenigstens aus dem ersten Ring gebildete Anschlag- bzw. Anlageschulter also ausgebildet, um in dem zylinderförmigen Lagergehäuse als Anlagefläche für links- und rechtsseitig dazu angeordneter Lagerringe von durch Federkraft vorgespannten Schräglagern, d. h. z. B. Schrägkugellagern und/oder Kegelrollenlagern, insbesondere in O-Anordnung zu wirken. Insbesondere können sich links- und rechtsseitig zu der Anlagefläche angeordnete Lageraußenringe der Schräglager an der in das Lagergehäuse (nachträglich) eingebauten Anlageschulter abstützen. Zusätzlich oder alternativ kann der erste Ring bzw. die Anlageschulter als Halterung für Federn zum Vorspannen der Schräglagerung in O-Anordnung wirken.

Ausführungsbeispiele der vorliegenden Erfindung umfassen nicht nur ein Verfahren sondern auch ein (nachgerüstetes) zylinderförmiges Lagergehäuse mit einer in einer Innenseite des zylinderförmigen Lagergehäuses eingebrachten ringförmigen Nut und einem in die ringförmige Nut eingesetzten ersten Ring als Anlageschulter, wobei der erste Ring einen ersten Ringaußendurchmesser größer als ein Gehäuseinnendurchmesser und einen ersten Ringinnendurchmesser kleiner als der Gehäuseinnendurchmesser aufweist. Durch die verschieden dimensionierten Durchmesser kann sichergestellt werden, dass der in die Nut eingebrachte erste Ring in dem zylinderförmigen Lagergehäuse nach innen hervorsteht, und somit als Anschlag- bzw. Anlageschulter für Lagerringe einer durch Federn vorgespannten O-Anordnung zweier beidseitig zu angeordneter Schräglager dienen kann.

Obwohl der erste Ring bevorzugt eine Mehrzahl von Ringsegmenten aufweist, um diese aufgrund des größeren Ringaußendurchmessers segmentweise in die Lagergehäusenut einbringen zu können, sind auch Ausführungsformen vorstellbar, bei denen der erste Ring einstückig und elastisch verformbar ausgebildet ist, um ihn auf diese Weise in die ringförmig umlaufende Nut einzubringen. Dies ist insbesondere bei relativ kleinen Lagergrößen denkbar.

Durch Ausführungsbeispiele kann in einem zylinderförmigen Lagergehäuse also im Nachhinein ein axialer Anschlag vorgesehen werden, der zudem vorteilhafterweise eine Vorspannung mittels Federn einer Wellenlagerung in O-Anordnung ermöglicht.

Weitere bevorzugte Ausführungsbeispiele und Weiterbildungen sind Gegenstand der abhängigen Patentansprüche sowie der nachfolgenden detaillierten Beschreibung von Ausführungsbeispielen.

Ausführungsbeispiele der vorliegenden Erfindung werden nachfolgend bezugnehmend auf die beiliegenden Figuren näher erläutert. Es zeigen:
- Fig. 1: eine schematische Darstellung eines Verfahrens zum Bereitstellen einer ringförmigen Anlageschulter in einer zylinderförmigen Bohrung eines Lagergehäuses, gemäß einem Ausführungsbeispiel;
- Fig. 2a: ein Ausführungsbeispiel eines ersten Rings in Segmentbauweise;
- Fig. 2b: eine Kombination aus erstem Ring mit innenliegendem Zentrierring gemäß einem Ausführungsbeispiel;
- Fig. 2c: eine Seitenansicht einer durch Federkraft angestellten Lagerung in O-Anordnung in einem zylinderförmigen Lagergehäuse mit einer (nachträglich) eingebauten ringförmigen Anschlagschulter, gemäß einem Ausführungsbeispiel;
- Fig. 3a: ein weiteres Ausführungsbeispiel eines ersten Rings in Segmentbauweise;
- Fig. 3b: eine Kombination aus erstem Ring mit innenliegendem Zentrierring gemäß einem weiteren Ausführungsbeispiel; und
- Fig. 3c: eine Seitenansicht einer angestellten Lagerung in X-Anordnung in einem zylinderförmigen Lagergehäuse mit einer (nachträglich) eingebauten ringförmigen Anschlagschulter, gemäß einem Ausführungsbeispiel.

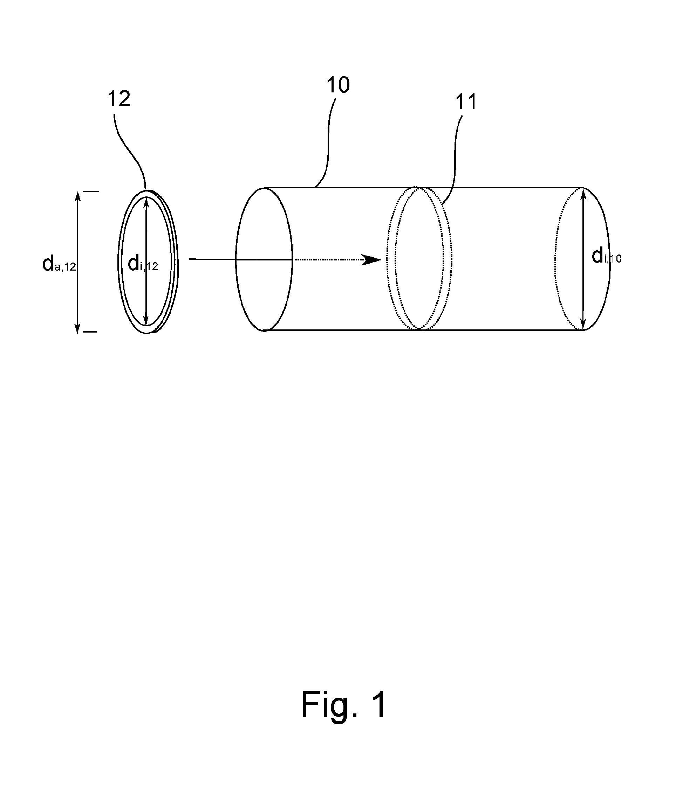

Fig. 1 zeigt eine schematische Darstellung eines zylinderförmigen Lagergehäuses 10 mit einem Gehäuseinnendurchmesser d_{i,10}. Bei dem zylinderförmigen Lagergehäuse 10 kann es sich beispielsweise um ein Lagergehäuse mit einer durchgehenden, zylinderförmigen Bohrung 10 zum Aufnehmen einer statisch bestimmten Wellenlagerung mit zwei Lagern handeln. Bei einer derart durchgehenden zylinderförmigen Lagergehäusebohrung 10 ist eine Lagervorspannung mittels Federn aufgrund fehlender Anschläge in der Gehäusebohrung 10 nicht ohne weiteres möglich. Ausführungsbeispiele der vorliegenden Erfindung umfassen daher ein Verfahren zum Bereitstellen einer ringförmigen Anschlag- bzw. Anlageschulter in dem zylinderförmigen Lagergehäuse 10.

Dazu wird auf einer Innenseite des zylinderförmigen Lagergehäuses bzw. der zylinderförmigen Bohrung 10 eine ringförmig umlaufende Nut 11 eingebracht. Dies kann beispielsweise mittels eines Eindrehens der Nut 11 in die Bohrung 10 geschehen. D. h., beispielsweise vermittels eines fest eingespannten Drehmeißels kann in dem drehenden Lagergehäuse 10 ein Span abgehoben werden, um die innen umlaufende Nut 11 zu erhalten. Danach wird in die ringförmige Nut 11 ein erster Ring 12 als Anlage- bzw. Anschlagschulter für ein Lager einer Wellenlageranordnung eingesetzt. Der erste Ring 12 weist dabei einen ersten Ringaußendurchmesser d_{a,12} größer als der Gehäuseinnendurchmesser d_{i,10} und einen ersten Ringinnendurchmesser d_{i,12} kleiner als der Gehäuseinnendurchmesser d_{i,10} auf.

Aufgrund des im Vergleich zum Gehäuse- oder Bohrungsinnendurchmesser d_{i,10} größeren ersten Ringaußendurchmessers d_{a,12} kann der erste, zumeist metallische oder aus Kunststoff gefertigte Ring 12 nicht ohne weiteres in die innenliegende Nut 11 eingebracht werden. Insbesondere bei kleinen und dadurch auch leichten Bauteilen könnte der erste Ring 12 an seinem Umfang beispielsweise eine Ausnehmung aufweisen, um den ersten Ring 12 beim Einbringen in die ringförmige Nut 11 durch elastische Verformung in die Bohrung 10 einführen zu können - ähnlich wie z. B. bei einem Innen-Sicherungsring bzw. einem Seegerring. Eine derartige elastische Verformung des ersten Rings 12 ist jedoch nicht immer möglich, insbesondere nicht bei größeren bzw. massiveren Lagerungen.

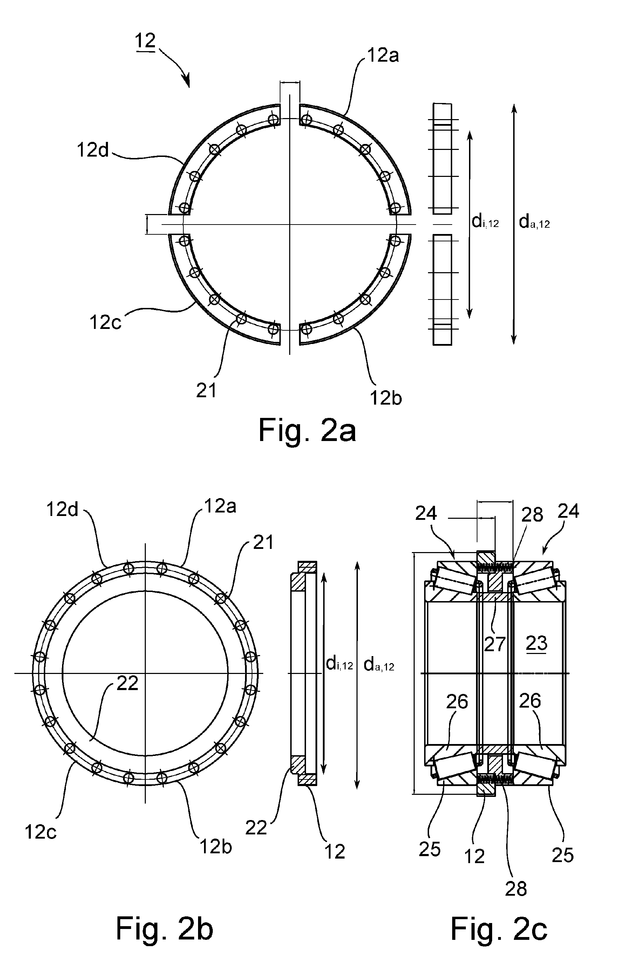

Gerade bei solchen größeren Lagerungen bzw. massiveren Lagerbauteilen ist eine elastische Verformung des ersten einzubringenden Rings 12, der beispielsweise auch aus einem Stahl gefertigt sein kann, praktisch unmöglich. Für solche Fälle sehen Ausführungsbeispiele der vorliegenden Erfindung eine segmentierte bzw. segmentweise Bauweise des ersten Rings 12 vor, wie es beispielhaft in der Fig. 2a dargestellt ist.

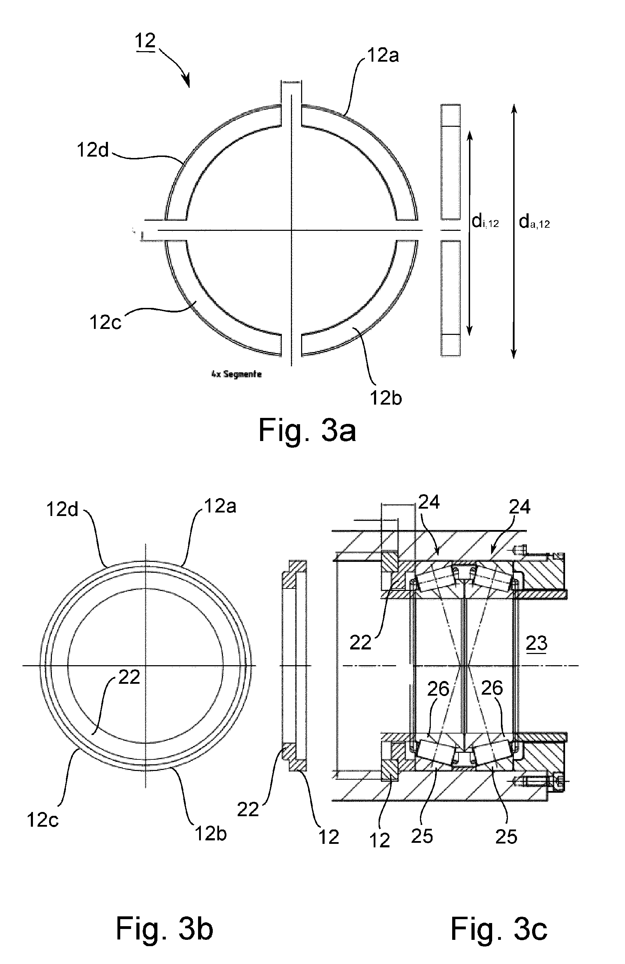

Die Fig. 2a und 3a zeigen verschiedene Ausführungsbeispiele des ersten als Anlageschulter für Lagerringe fungierenden Rings 12, welcher lediglich exemplarisch vier separate Ringsegmente 12a - 12d, jeweils entsprechend einem Viertelring, aufweist. Diese Segmentbauweise erleichtert ein Einsetzen des ersten Rings 12, der einen im Vergleich zum Gehäuseinnendurchmesser d_{i,10} größeren Ringaußendurchmesser d_{a,12} aufweist, in die ringförmig umlaufende Nut 11 der durchgehenden Lagergehäusebohrung 10. Gemäß Ausführungsbeispielen können die Ringsegmente 12a - 12d beispielsweise eins nach dem anderen segmentweise in die ringförmig umlaufende Nut 11 eingesetzt werden. Um einen guten Sitz der jeweiligen Ringsegmente 12a - 12d in der Nut 11 zu erhalten, wird eine Krümmung der Außenseiten der Ringsegmente 12a - 12d vorzugsweise im Wesentlichen gleich einer Krümmung der in der Gehäusebohrung 10 umlaufenden Nut 11 gewählt.

Wie es in der Fig. 2a dargestellt ist, kann der erste Ring 12 bzw. dessen Segmente 12a - 12d in Umfangsrichtung mit durch Ringumfangsstege verlaufenden Bohrungen 21 versehen sein. Wie es im Nachfolgenden noch erläutert wird, können durch diese Bohrungen 21 Federn zur Vorspannung von Schräglagerungen, insbesondere in O-Anordnung, geführt werden.

Wird der erste Ring 12, wie in den Fig. 2a und 3a angedeutet, segmentweise in die Nut 11 eingesetzt, so kann nach dem segmentweisen Einsetzen des ersten Rings 12 ein zweiter, einteiliger Ring 22 mit einem zweiten Ringaußendurchmesser d_{a,22} in das Lagergehäuse 10 eingebracht werden, wobei der zweite Ring 22 angepasst ist, um die Ringsegmente 12a - 12d des ersten Rings 12 in der ringförmig umlaufenden Nut 11 zu halten bzw. zu fixieren (siehe Fig. 2b, 3b). Bei diesem zweiten Ring 22 handelt es sich also quasi um einen Zentrierring, dessen Außendurchmesser d_{a,22} im Wesentlichen dem Innendurchmesser d_{i,12} des ersten Rings 12 entsprechen kann. Der Außendurchmesser d_{a,22} kann jedoch ein kleines Übermaß aufweisen, sodass der zweite Ring 22 in dem ersten Ring 12 bzw. dessen Ringsegmenten 12a - 12d einen Klemmsitz einnehmen kann, um die Ringsegmente 12a - 12d in die umlaufende Nut 11 zu drücken. Wie es weiter oben bereits beschrieben wurde, sind neben dem Klemmsitz auch andere Fixierungsalternativen denkbar, wie z. B. ein Verschrauben, Verkleben, Verschweißen, etc. Handelt es sich bei dem ersten Ring 12 um einen einteiligen Ring, so würde der zweite Ring 22 natürlich nicht unbedingt benötigt.

In Fig. 2b ist von dem ersten Ring 12 lediglich ein noch aus der umlaufenden Nut 11 nach innen hervorstehender Teil mit den Bohrungen 21 dargestellt. Die Fig. 3 zeigt einen entsprechenden nach innen hervorstehenden Teil des ersten Rings 12 ohne Bohrungen. In der Seitenansicht (Fig. 2b, 3b rechts) ist zu erkennen, dass der zweite (innere) Ring 22 und der erste (äußere) Ring 12 axial (d. h. in Richtung einer Wellen- oder Lagerrotationsachse) leicht zueinander versetzt angeordnet sein können. Durch das axiale Versetzen der Ringe 12 und 22 kann vorteilhaft ein Abstand zwischen links- und rechtsseitig (d. h. beidseitig) zu den beiden Ringen 12, 22 angeordneten Schräglagern eingestellt werden, wie es noch anhand der Fig. 2c verdeutlicht wird. Eine axiale Ausdehnung der axial versetzt angeordneten Ringe 12 und 22 kann beispielsweise in einem Bereich um 20 mm liegen, wobei die axiale Ausdehnung, d.h. die Dicke, des ersten Rings 12 beispielsweise ca. 10 mm beträgt. Dabei kann der erste Ring 12 beispielsweise einen Außendurchmesser d_{a,12} von ca. 135 mm aufweisen.

Die Fig. 2c und 3c zeigen jeweils in einer schematischen Seitenansicht ein gemäß dem im Vorhergehenden beschriebenen Verfahren nachgerüstetes zylinderförmiges Lagergehäuse 10 mit einem darin eingesetzten und als Anschlagschulter fungierenden ersten Ring 12. Ringsegmente 12a-d des ersten Rings 12 werden vermittels eines zweiten Rings 22 in einer auf einer Innenseite des zylinderförmigen Lagergehäuses 10 eingebrachten ringförmigen Nut (in den Fig. 2c, 3c zur besseren Übersicht nicht gezeigt) fixiert.

Bezugnehmend auf Fig. 2c können nach dem Einarbeiten der Nut 11 und dem Einsetzen des ersten und ggf. des zweiten Rings 12, 22 in axialer Richtung zu beiden Seiten der wenigstens durch den ersten Ring 12 gebildeten Anschlagschulter Schräglager 24 zum Lagern einer Welle 23 in das zylinderförmige Lagergehäuse bzw. die Bohrung 10 eingebracht werden, sodass ein Lagerring 25 wenigstens eines der Schräglager 24 an dem ersten und/oder dem zweiten Ring 12, 22 anliegen kann. Die in Fig. 2c gezeigte angestellte Lagerung in O-Anordnung kann links- und rechtsseitig beispielsweise durch schematisch angedeutete Wellenabsätze und/oder Wellenmuttern axial auf der Welle 23 festgelegt sein. Lagerinnenringe 26 der beiden dargestellten Schräglager 24 können also links- bzw. rechtsseitig von den Ringen 12, 22 von Wellenabsätzen bzw. Wellenmuttern festgelegt sein. Zusätzlich können zwischen den Lagerinnenringen 26 Distanzstücke 27 vorgesehen sein, die aber bei bestimmten Kraftverhältnissen in der Schräglageranordnung nicht unbedingt notwendig sind.

Ausführungsbeispiele der vorliegenden Erfindung erlauben nun eine vorteilhafte Anstellung der Schräglagerung in O-Anordnung mittels Federn, welche in Fig. 2c mit den Bezugszeichen 28 versehen sind. Eine Feder 28 wirkt auf den Außenring 25 eines der beiden Lager 24, der dazu in axialer Richtung verschiebbar sein sollte. Die Vorspannkraft bleibt auch bei axialen Verschiebungen des Lagers aufgrund thermischer Längenänderungen der Läuferwelle 23 praktisch konstant. Die durch die Bohrungen 21 durchgeführten Federn 28 bewirken also durch ihre Federkraft jeweils eine vorbestimmte Vorspannung der Schräglagerung in O-Anordnung, indem sie jeweils eine Kraft auf die links- und rechtsseitig befindlichen Lageraußenringe 25 des Schräglagers 24 ausüben. Durch die durch die Bohrungen 21 hindurchlaufenden Federn 28 ist eine vergleichsweise genaue Vorspannung der Schräglager Anordnung in dem Lagergehäuse 10 möglich. Dazu kann beispielsweise eine Anzahl der in Umfangsrichtung platzierten Federn variiert werden, sowie zusätzlich oder alternativ deren jeweilige Federkonstante bzw. Federweges.

Die beiden Ringe 12 und 22 dienen jeweils als axialer Anschlag für die beiden links- und rechtsseitig dazu (gegeneinander angestellt) angeordneten Schräglager 24, bei denen es sich beispielsweise um Kegelrollenlager (wie in Fig. 2c exemplarisch dargestellt), um Axial-Pendelrollenlager oder um Schrägkugellager handeln kann. D. h., gemäß Ausführungsbeispielen ist der erste und/oder der zweite Ring 12, 22 ausgebildet, um in dem zylinderförmigen Lagergehäuse 10 als Anschlagschulter für axial links- und rechtsseitig dazu angeordnete Lagerringe, insbesondere Lageraußenringe 25, von Schräglagern in O-Anordnung zu wirken. Grundsätzlich könnten die beiden Ringe 12 und 22 aber auch als axialer Anschlag für Axiallager dienen.

Herkömmlicherweise ist eine Vorspannung einer Lagerung in O-Anordnung mittels Federn bei einem Lagergehäuse mit einer durchgehenden Bohrung nicht ohne weiteres möglich, da keine Anschläge mehr im Gehäuse vorhanden sind. Gemäß Ausführungsbeispielen kann durch die Ringe 12, 22 eine Art "Adapter" in das Lagergehäuse 10 eingeführt werden, um für die Schräglager 24 in O-Anordnung eine Anlagefläche zu schaffen. Dazu kann in die durchgehende Gehäusebohrung 10 zunächst eine Nut 11 eingedreht werden. Der Anschluss für die Anlagefläche wird daraufhin mithilfe von einem beispielsweise in vier Segmente 12a - 12d geteilten ersten Ring 12 hergestellt. Diese vier Segmente 12a - 12d werden in die Nut 11 eingefügt. Die Segmentierung ist vorteilhaft, um den Ring 12, dessen Außendurchmesser d_{a,12} größer ist als die Bohrung 10, überhaupt darin einbauen zu können. Nachdem die Segmente 12a - 12d eingefügt sind, kann gemäß Ausführungsbeispielen ein zweiter, einteiliger Ring 22 eingefügt werden, um die Segmente 12a - 12d zu zentrieren.

Bezugnehmend auf die Fig. 3c können nach dem Einarbeiten der Nut 11 und dem Einsetzen des ersten und ggf. des zweiten Rings 12, 22 in lediglich einer axialen Richtung zu der durch den ersten Ring 12 gebildeten Anschlagschulter Schräglager 24 zum Lagern einer Welle 23 in das zylinderförmige Lagergehäuse bzw. die Bohrung 10 eingebracht werden, sodass ein Lagerring 25 wenigstens eines der Schräglager 24 an dem ersten und/oder dem zweiten Ring 12, 22 anliegen kann. Die in Fig. 3c gezeigte angestellte Lagerung in X-Anordnung kann auf einer der Anschlagschulter 12, 22 gegenüberliegenden Seite der Lageranordnung (hier: rechtsseitig) beispielsweise durch schematisch angedeutete Wellenabsätze und/oder -muttern oder dergleichen axial auf der Welle 23 festgelegt sein. Lageraußenringe 25 der beiden dargestellten Schräglager 24 können also auf einer Seite von den Ringen 12, 22 und auf der anderen Seite von herkömmlichen Haltevorrichtungen festgelegt sein. Lagerinnenringe 25 können auf beiden Seiten der Lagerung in X-Anordnung beispielsweise durch Wellenabsätze festgelegt sein.

Dadurch kann in dem zylinderförmigen Lagergehäuse 10 eine Anlageschulter zur Anstellung einer Schräglagerung in O-Anordnung erhalten werden, ohne dafür extra ein neues Gehäuse fertigen zu müssen. Stattdessen können nun ohne Weiteres die Federn 28 und die Schräglager 24 in das für die Federvorspannung nachgerüstete Lagergehäuse 10 eingebaut werden.

### Bezugszeichenliste

- 10: zylinderförmiges Lagergehäuse bzw. Bohrung
- 11: ringförmig in der Bohrung umlaufende Nut
- 12: erster Ring
- 12a-d: Ringsegmente des ersten Rings
- 21: Bohrung für Feder
- 22: zweiter Ring, Zentrierring
- 23: zu lagernde Welle
- 24: Schräglager (z. B. Kegelrollenlager, Schrägkugellager)
- 25: Lageraußenring
- 26: Lagerinnenring
- 27: Distanzstück
- 28: Feder zur Erzeugung der Vorspannung

## Patentansprüche

1. Ein Verfahren zum Bereitstellen einer ringförmigen Anlageschulter in einem zylinderförmigen Lagergehäuse (10) mit einem Gehäuseinnendurchmesser (d_{i,10}), mit folgenden Schritten:
Einbringen einer ringförmigen Nut (11) auf einer Innenseite des zylinderförmigen Lagergehäuses (10);
Einsetzen, in die ringförmige Nut (11), eines ersten Rings (12) als Anlageschulter mit einem ersten Ringaußendurchmesser (d_{a,12}) größer als der Gehäuseinnendurchmesser (d_{i,10}) und einem ersten Ringinnendurchmesser (d_{i,12}) kleiner als der Gehäuseinnendurchmesser (d_{i,10}), wobei der erste Ring (12) eine Mehrzahl von separaten Ringsegmenten (12a-d) aufweist und segmentweise in die Nut (11) eingesetzt wird; und
Einbringen, nach dem segmentweisen Einsetzen des ersten Rings (12), eines zweiten einteiligen Rings (22) mit einem zweiten Ringaußendurchmesser (d_{a,22}) in das Lagergehäuse (10), um die Ringsegmente (12a-d) des ersten Rings (12) in der ringförmigen Nut (11) zu fixieren.

2. Das Verfahren nach Anspruch 1, wobei der zweite Ring (22) als Zentrierring in das Lagergehäuse (10) eingebracht wird, der einen zweiten Ringaußendurchmesser (d_{a,22}) aufweist, sodass der Zentrierring (22) in dem ersten Ring (12) einen Klemmsitz einnimmt, um dessen Ringsegmente (12a-d) in die ringförmig umlaufende Nut (11) des Lagergehäuses (10) zu drücken und zu fixieren.

3. Das Verfahren nach Anspruch 2, wobei der Zentrierring (22) axial versetzt innerhalb des ersten Rings (12) angeordnet wird.

4. Das Verfahren nach einem der vorhergehenden Ansprüche, wobei nach dem Einsetzen des ersten und/oder des zweiten Rings (12; 22) beidseitig zu dem ersten und/oder zweiten Ring (12; 22) Schräglager (24) zum Lagern einer Welle (23) in das zylinderförmige Lagergehäuse (10) eingebracht werden, sodass ein Lagerring (25) wenigstens eines Schräglagers (24) an dem ersten und/oder zweiten Ring (12; 22) anliegt.

5. Das Verfahren nach einem der vorhergehenden Ansprüche, wobei vor dem Einsetzen des ersten Rings (12) in die ringförmige Nut (11), der erste Ring (12) mit Bohrungen (21) versehen wird, um in eingebautem Zustand eine Durchführung von Federn (28) zum Vorspannen von beidseitig zu dem ersten Ring (12) angeordneten Schräglagern (24) zu ermöglichen.

6. Ein zylinderförmiges Lagergehäuse (10) mit einem Gehäuseinnendurchmesser (d_{i,10}), mit folgenden Merkmalen:
einer in einer Innenseite des zylinderförmigen Lagergehäuses (10) eingebrachten ringförmigen Nut (11);
einem in die ringförmige Nut (11) eingesetzten ersten Ring (12) als Anlageschulter, wobei der erste Ring (12) einen ersten Ringaußendurchmesser (d_{a,12}) größer als der Gehäuseinnendurchmesser (d_{i,10}) und einen ersten Ringinnendurchmesser (d_{i,12}) kleiner als der Gehäuseinnendurchmesser (d_{i,10}) aufweist,
wobei der erste Ring (12) eine Mehrzahl von separaten Ringsegmenten (12a-d) aufweist und segmentweise in die Nut (11) eingesetzt ist, wobei in den ersten Ring (12) ein zweiter einteiliger Ring (22) mit einem zweiten Ringaußendurchmesser (d_{a,22}) eingebracht ist, der angepasst ist, um die Ringsegmente (12a-d) des ersten Rings (12) in der ringförmigen Nut (11) zu fixieren.

7. Das zylinderförmige Lagergehäuse (10) nach Anspruch 6, wobei die Anlageschulter ausgebildet ist, um in dem zylinderförmigen Lagergehäuse (10) als Anlageschulter für links- und rechtsseitig dazu angeordnete Lagerringe (25) von durch Federkraft vorgespannten Schräglagern (24) in O-Anordnung zu wirken.

8. Das zylinderförmige Lagergehäuse (10) nach einem der Ansprüche 6 oder 8, wobei der erste Ring (12) in Umfangsrichtung angeordnete Bohrungen (21) aufweist, um in eingebautem Zustand eine Durchführung von Federn (28) zum Vorspannen von beidseitig zu dem ersten Ring (12) angeordneten Schräglagern (24) zu ermöglichen.
